# EUROPEAN PATENT SPECIFICATION

(11) **EP 3 636 564 B1**
(45) Date of publication and mention of the grant of the patent: **20.09.2023**
(21) Application number: 19150446.3
(22) Date of filing: 07.01.2019
(51) Int. Cl.: B65G 23/44, D06B 23/02, D06B 23/04

(54) **CONVEYOR-DRIVEN FABRIC DYEING MACHINE INCLUDING AN AXLE DISTANCE ADJUSTMENT DEVICE**
FÖRDERBANDBETRIEBENE GEWEBEFÄRBEMASCHINE MIT EINER VORRICHTUNG ZUM EINSTELLEN DES ACHSABSTANDS
MACHINE DE TEINTURE DE TISSU ENTRAÎNÉE PAR CONVOYEUR AVEC UN DISPOSITIF DE RÉGLAGE DE DISTANCE D'ESSIEU

(30) Priority: 12.10.2018 TW 107213799 U
(43) Date of publication of application: 15.04.2020
(73) Proprietor: Chang, Chi-Lung, Taoyuan Dist. (TW)
(72) Inventor: Chang, Chi-Lung, Taoyuan Dist. (TW)
(74) Representative: Horak, Michael

(56) References cited:
- EP-A1- 3 081 684
- CN-A- 107 164 901
- CN-U- 203 497 605
- CN-U- 205 058 864
- DE-A1- 2 603 884

## Description

### (a) Technical Field of the Invention

The present invention relates generally to a fabric dyeing machine, and more particularly to an axle distance adjustment device that allows for efficient and convenient adjustment of tightness of a conveyor belt that is arranged inside the dyeing machine in case of slackening of the conveyor belt caused by wear and abrasion.

### (b) Description of the Prior Art

Taiwan Patent Application No. 86111350, which is an early invention of the present inventor, discloses a dyeing machine including a conveyor device, of which the structure comprises a conveyor device arranged inside a machine body of the dyeing machine to help convey or advance fabric to circulate through the machine.

Since the conveyor device is arranged inside the machine body of the dyeing machine and since the rotary axles of rollers of the conveyor are fixed, a length of a chain of the conveyor may not be readily controlled and may get over-tight or over-loose, leading to poor installation and improper operation. Further, the conveyor device, after having been put into operation of a period of time, might suffer wearing and abrasion of parts thereof. Since the rollers at two ends of the conveyor device are generally immobile and fixed, meaning the distance between axles thereof is not adjustable, slackening of the conveyor belt may readily occur, making it adverse to the operation and movement of the conveyor belt. Skilled persons must be retained to adjust the length of the chain, or supporting measures must be provided at proper locations of the chain in order to adjust and control the tightness thereof, for improving slackening issues of the conveyor belt.

Prior art patent documents are known, such as EP 3 081 684 A1, CN 203 497605 U, and CN 205 058 864 U. EP 3 081 684 A1 teaches a conveyor drive fabric dyeing machine that includes a conveyor arranged in a machine body of the dyeing machine. However, EP 3 081 684 A1 does not teach an axle distance adjustment device for adjusting a distance between rollers arranged at two ends of the conveyor. CN 203 497 605 U and CN 205 058 864 U both teach solutions of moving a moving part relative to a fixed part in order to achieve adjustment of distance. However, they do not teach arranging a seal element between the moving part and the fixed part to provide a sealing effect between the two for resisting leakage of liquid and high pressure involved in a machine body of a dyeing machine.

Further, CN 107 164 901 A discloses a conveyor-driven dyeing machine that includes a conveyor belt tensioning device. The tensioning device includes a reinforcing plate mounted to an outer wall of a bath tank and a sliding plate positioned on the reinforcing plate. A tensioning bolt is connected to the slide plate and is arranged in a tensioning direction of a driven roller. However, there is no guiding arrangement provided between the reinforcing plate and the sliding plate to ensure the movement of the sliding plate in a desired direction relative to the reinforcing plate.

### SUMMARY OF THE INVENTION

An objective of the present invention is to provide a solution that overcomes the problem that a conveyor belt involved in a conventional fabric dyeing machine may get excessively tight or excessively loose resulting from being undesired lengthening or shortening of the conveyor belt caused by wearing or abrasion and that allows for adjustment of the conveyor belt to an optimum length to ensure more stable and smoother operation of the conveyor belt, without being interfered with by chain detachment or excessive wearing.

An axle distance adjustment device for use with a conveyor-driven fabric dyeing machine is provided, of which the technical solution comprises: a machine body, which has an interior space; one or multiple conveyor devices, which are arranged in the interior space of the machine body. The conveyor device comprises a conveyor belt in the form of an endless loop, a movable roller arranged at one end of he conveyor belt, and a fixed roller arranged at an opposite end of the conveyor belt. The movable roller is mounted to a rotary axle, and the fixed roller is mounted to another rotary axle. The rotary axle of the fixed roller is mounted, through bearings, to a side wall of the machine body in a manner of being rotatable but fixed in position. The movable rotary axle is mounted, through bearings, to a side wall of the machine body in a manner of being rotatable and position adjustable. The movable rotary axle has two ends respectively extending through and coupled to central holes of hollow bearing seat bases respectively mounted to two opposite side walls of the machine body to mate with bearing seats that are movable relative to the hollow bearing seat bases and mounted thereto so that the movable rotary axle is rotatable with the bearings in the bearing seats. The position-adjustable bearing seat and the hollow bearing seat base have surfaces facing and contacting each other and a seal element is provided between the contacting surfaces. Further, shaft seals may be arranged between two ends of the rotary axle of the fixed roller and the hollow bearing seats to prevent leaking of liquid or pressure. Shaft seals may also be provided between two ends of the rotary axle of the movable roller and the hollow bearing seats to prevent leaking of liquid and pressure. The position-adjustable bearing seat and the hollow bearing seat base may have shapes and sizes that are determined according to the range of adjustability of axle distance and desired sealing therebetween so that sealing can be maintained at the contacting interface therebetween even though the positions of the bearing seat and the bearing base may be changed. As such, the position-adjustable bearing seat and the hollow bearing seat base are arranged to allow for varying relative movement or relative displacement between the position-adjustable bearing seat and the hollow bearing seat base. To ensure movements between the position-adjustable bearing seats and the hollow bearing seat bases being made parallel, and preferably in a horizontal direction, the position-adjustable bearing seat is provided with a horizontal rail and the hollow bearing seat base is provided with a horizontal rail support, so that adjustment of the axle distance between the rotary axle of the movable roller and the rotary axle of the fixed roller can be carried out and then the position-adjustable bearing seat and the hollow bearing seat base are fixed again.

The present invention provides a conveyor-driven fabric dyeing machine including an axle distance adjustment device, comprising: a machine body, which has an interior space; one or multiple conveyor devices, which are arranged in the interior space of the machine body, the conveyor device or each of the conveyor devices comprising a conveyor belt in the form of an endless loop, a movable roller arranged at one end of the conveyor belt, and a fixed roller arranged at an opposite end of the conveyor belt, the fixed roller having rotary axles at two ends thereof and having two distal ends respectively coupled through bearings to bearing seats mounted to sidewalls of the machine body, the movable roller having rotary axles at two ends thereof and having two distal ends each of which is respectively coupled through a bearing to a position-adjustable bearing seat, the position-adjustable bearing seat being coupled to a hollow bearing seat base mounted to a side wall of the machine body, wherein the position-adjustable bearing seat is selectively attachable to the hollow bearing seat base at different positions so that the rotary axles of the movable roller are set at different axle distances with respect to the rotary axles of the fixed roller for adjustment of tightness of the conveyor belt, wherein a seal element is provided between contact surfaces of the position-adjustable bearing seat and the hollow bearing seat base in order to provide a sealing effect between the contact surfaces of the position-adjustable bearing seat and the hollow bearing seat base to resist leaking of liquid or pressure; and the position-adjustable bearing seat is provided with a horizontal rail, and the hollow bearing seat base is provided with a horizontal rail support to ensure a relative movement between them is carried out in a horizontal direction.

In the dyeing machine of the present invention as described above, when the conveyor device arranged inside the dyeing machine suffers the conveyor belt having an improper chain length or slackening caused by wearing and abrasion, an operator may efficiently and conveniently change and adjust the tightness of the conveyor device to ensure smooth operation of the conveyor belt, reduce wearing and abrasion, and enhance lift spand.

The foregoing objectives and summary provide only a brief introduction to the present invention. To fully appreciate these and other objects of the present invention as well as the invention itself, all of which will become apparent to those skilled in the art, the following detailed description of the invention and the claim should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred embodiment of the present invention is shown by way of illustrative example.

### BRIEF DESCRIPTION OF THE DRAWINGS

FIG. 1 is a schematic top plan view showing a structure of a fabric dyeing machine according to the present invention.
FIG. 1A is an enlarged view of a circled portion 1A of FIG. 1.
FIG. 2 is a schematic perspective view illustrating a position-adjustable bearing seat according to the present invention.
FIG 2A is a front view of FIG 2.
FIG 2B is a cross-sectional view taken along line 2B-2B of FIG 2A.
FIG 3 is a schematic perspective view illustrating a position-adjustable bearing seat fixing structure according to the present invention.
FIG. 3A is a front view of FIG. 3.
FIG. 3B is a cross-sectional view taken along line 3B-3B of FIG. 3A.
FIG. 4 is a schematic view illustrating a condition where centers of the position-adjustable bearing seat and a hollow bearing seat base completely coincide with each other.
FIG 4A is a schematic view illustrating the position-adjustable bearing seat moving leftward relative to the hollow bearing seat base to lengthen an axle distance according to the present invention.
FIG. 4B is a schematic view illustrating the position-adjustable bearing seat moving rightward relative to the hollow bearing seat base to shorten the axle distance according to the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claim.

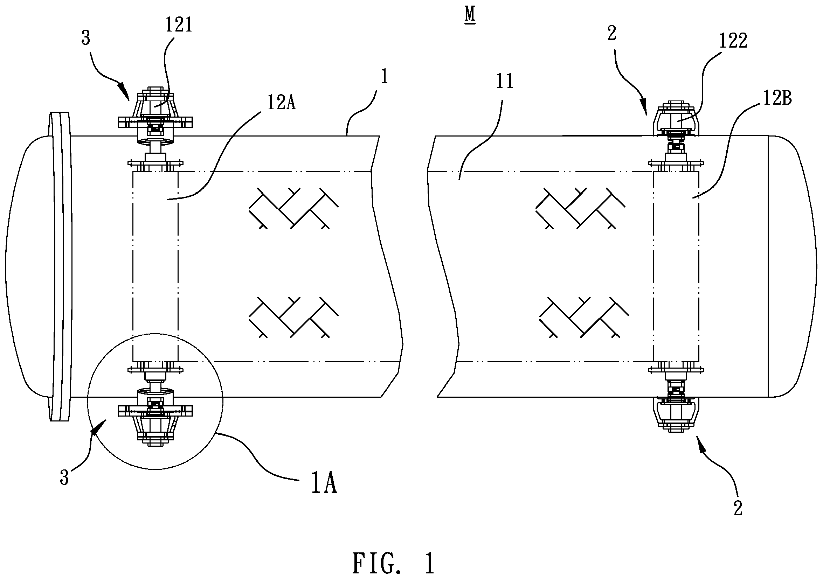

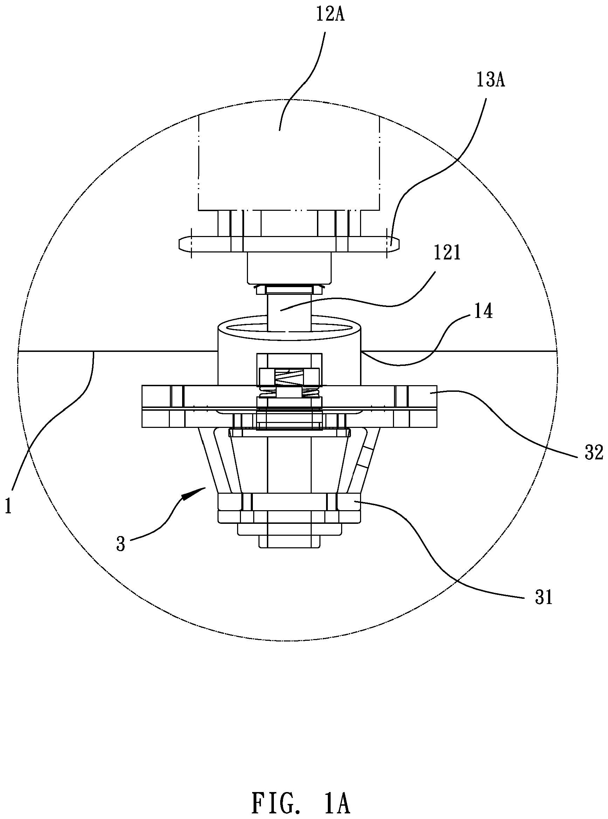

As shown in FIG 1, the present invention provides a conveyor-driven fabric dyeing machine M, which comprises a machine body 1 having an interior space and a conveyor device arranged in the interior space of the machine body 1. The conveyor device comprises a conveyor belt 11 in the form of an enclosing loop, a movable roller 12A arranged at one end of the conveyor belt 11, and a fixed roller 12B arranged at an opposite end of the conveyor belt 11. The movable roller 12A has two opposite ends each of which is provided, at a center thereof, with a rotary axle 121. The fixed roller 12B has two opposite ends, each of which is provided, at a center thereof, with a rotary axle 122. The two rotary axles 122 are each mounted to a side wall of the machine body 1 by means of a fixed roller axle mounting device 2, so that the rotary axle 122 is mounted to the side wall of the machine body in a position-fixed but rotatable manner. The two rotary axles 121 are each mounted to a side wall of the machine body 1 by means of a movable roller axle mounting device 3, so that the rotary axle 121 is allowed to rotate relative to the machine body 1 and also move relative to the machine body 1 to change a position thereof. Specifically, the fixed roller axle mounting device 2 comprises a bearing seat that is fixed to the side wall of the machine body and the rotary axle 122 of each of the two ends of the fixed roller 12B is mounted, via a bearing, to the bearing seat, so that the fixed roller 12B and the rotary axles 122 are rotatable but are not allowed to move or displace relative to the machine body.

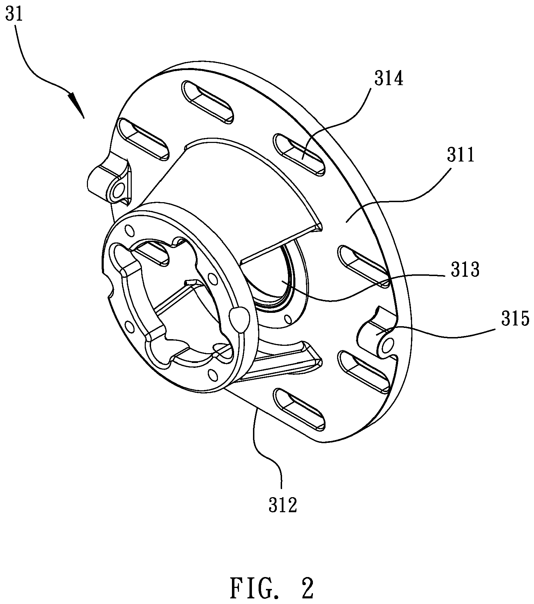

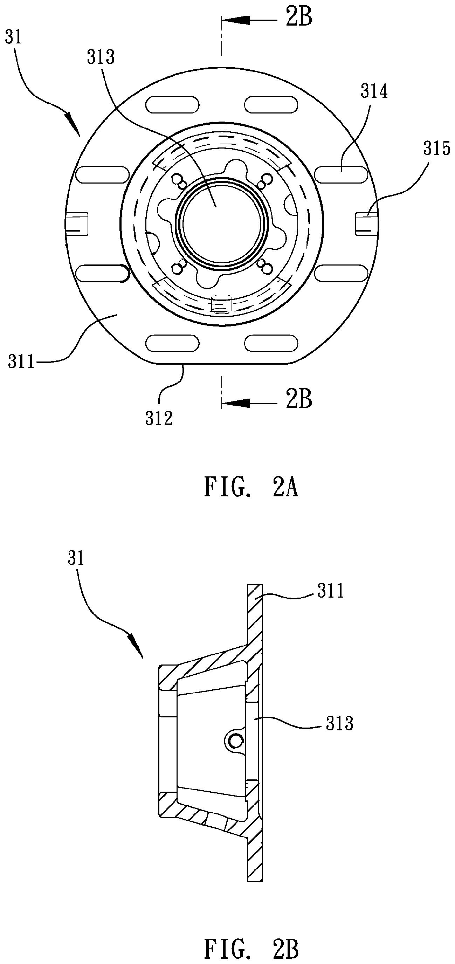

As shown in FIGS. 1A, 2, 2A, 2B, 3, 3A, and 3B, in a preferred embodiment of the present invention, the movable roller axle mounting device 3 comprises a position-adjustable bearing seat 31 and a hollow bearing seat base 32. As shown in FIGS. 2, 2A, and 2B, the position-adjustable bearing seat 31 comprises a disk 311, which is circular in shape. The disk 311 has a side forming or serving as a bearing seat in which a bearing is mounted and comprising a center hole 313. The disk 311 of the position-adjustable bearing seat 31 the disk 311 is formed with a plurality of elongate holes 314 arranged as a circular array around the center hole 313 and extending parallel and preferably in a horizontal direction. Optionally, a lug 315 is provided on each of two opposite side portions of the disk 311 to ease moving and adjusting the position-adjustable bearing seat 31 or to fix the position-adjustable bearing seat 31 in position against undesired or unexpected movement or displacement.

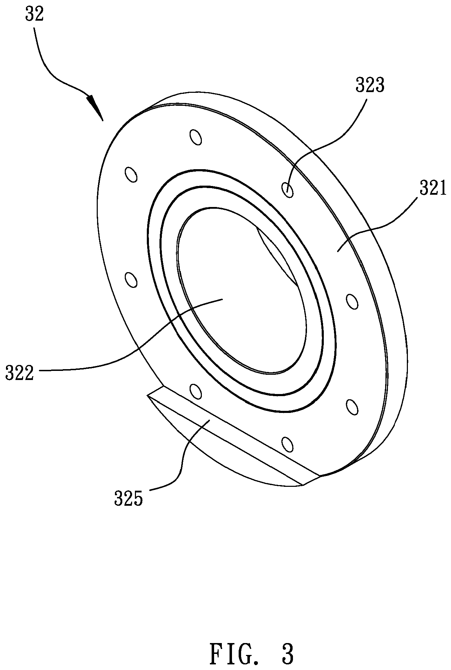

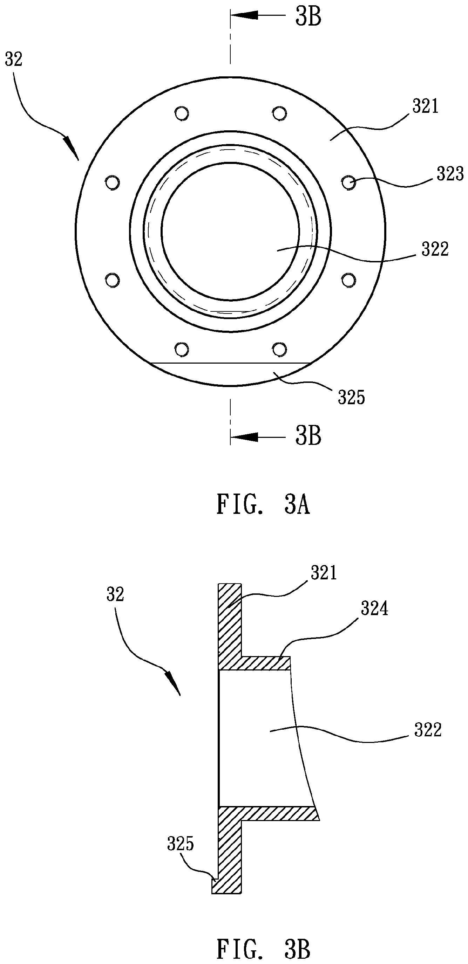

As shown in FIG. 3, 3A, and 3B, according to the present invention, the hollow bearing seat base 32 comprises a fixed base 321 in the form of a circular disk and formed with a central hole 322 in a central portion thereof and extending completely therethrough. The fixed base 321 is formed with a plurality of circular holes 323 arranged as a circular array around the central hole 322. The circular holes 323 correspond, in number and position, to the elongate holes 314 of the position-adjustable bearing seat 31, so that when the position-adjustable bearing seat 31 and the hollow bearing seat base 32 are stacked on each other, the elongate holes 314 are respectively set in axial alignment with the circular holes 323 to allow fasteners to selectively fix them together. Further, the hollow bearing seat base 32 comprises a cylindrical portion 324 axially extending from one side thereof for mounting to the side wall of the machine body 1.

Further, a seal element, such as seal ring or gasket (not shown), may be provided between contact surfaces of the position-adjustable bearing seat 31 and the hollow bearing seat base 32, when they are stacked on each other, in order to provide a sealing effect between the contact surfaces of the position-adjustable bearing seat 31 and the hollow bearing seat base 32 to resist leaking of liquid or pressure.

The present invention uses the movable roller axle mounting devices 3 to mount the movable rotary axles 121 to the machine body 1 in a manner of being movable relative to the machine body 1. A feasible mounting arrangement comprises welding applied to the cylindrical portions 324 of the hollow bearing seat bases 32 to have the hollow bearing seat bases 32 securely combined with the machine body 1.

Distal ends of the rotary axles 121 of the movable roller 12A extend respectively through the central holes 322 of the hollow bearing seat bases 32, respectively, to further project outside the machine body 1, and the rotary axles 121 are then fixed, through bearings (not shown), to the position-adjustable bearing seats 31, respectively, to allow the rotary axles 121 to be freely rotatable in the center holes 313 with the bearings. Surfaces of the position-adjustable bearing seat 31 and the hollow bearing seat base 32 that face each other are fixed together by means of a plurality of bolts 33 extending through the circular holes 323 and the elongate holes 314, respectively, to be fastened with nuts 34. Further, the seal element provided between the contact surfaces of the position-adjustable bearing seat 31 and the hollow bearing seat base 32 may prevent undesired leaking of liquid or pressure. To ensure a relative horizontal movement between the position-adjustable bearing seat 31 and the hollow bearing seat base 32 for adjustment of an axle distance, the position-adjustable bearing seat 31 is provided with a horizontal rail 312, and the hollow bearing seat base 32 is provided with a horizontal rail support 325 to ensure a relative movement between them is carried out in a horizontal direction.

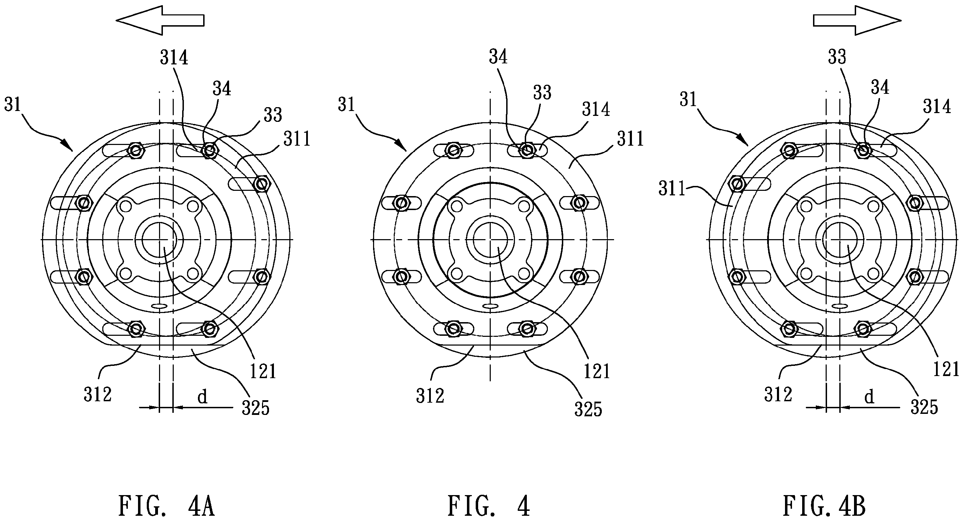

The present invention uses the movable roller axle mounting devices 3 to mount, in a movable manner, the movable rotary axles 121 to the machine body 1, and then an axle distance between the rotary axles 121 and the rotary axles 122 of the fixed roller 12B can be adjusted or varied. For example, as shown in FIG. 4, the position-adjustable bearing seat 31 and the hollow bearing seat base 32 can be so adjusted to have centers thereof completely coincide with each other. In case that the conveyor belt 11 has an excessively tight tension, the nuts 34 may be rotated and loosened to allow the position-adjustable bearing seat 31 and the rotary axle 121 to be moved rightward for a distance d to shorten the axle distance between the rotary axle 121 and the rotary axle 122, and then the nuts 34 may be fastened again (this being shown in FIG. 4B). Also, the lugs 315 provided on the two opposite side portions of the position-adjustable bearing seat 31 can be used for fixing, in any desired way, to prevent undesired leftward or rightward movement or displacement of the position-adjustable bearing seat 31 caused by unexpected or undesired loosening of the bolts 33. On the other hand, in case that the tension of the conveyor belt 11 get excessively loose or slackens due to wearing and abrasion, the nuts 34 may also be rotated and loosened to allow the position-adjustable bearing seat 31 and the rotary axle 121 to move or displace together in a leftward direction by a distance d to lengthen the axle distance between the rotary axle 121 and the rotary axle 122, and then, the nuts 34 are fastened again (this being shown in FIG. 4A). The elongate holes 314 may be provided with a lengthwise dimension that corresponds to a maximum range of adjustment of the axle distance. As such, an operator may efficiently and conveniently adjust or control the tension or tightness of the conveyor belt 11 outside the machine body and does not need to get into the interior space of the machine body to carry out the adjustment.

It will be understood that each of the elements described above, or two or more together may also find a useful application in other types of methods differing from the type described above.

## Claims

1. A conveyor-driven fabric dyeing machine (M) including an axle distance adjustment device, comprising:
a machine body (1), which has an interior space;
one or multiple conveyor devices, which are arranged in the interior space of the machine body (1), the conveyor device or each of the conveyor devices comprising a conveyor belt (11) in the form of an endless loop, a movable roller (12A) arranged at one end of the conveyor belt (11), and a fixed roller (12B) arranged at an opposite end of the conveyor belt (11), the fixed roller (12B) having rotary axles (122) at two ends thereof and having two distal ends respectively coupled through bearings to bearing seats mounted to sidewalls of the machine body (1), the movable roller (12A) having rotary axles (121) at two ends thereof and having two distal ends each of which is respectively coupled through a bearing to a position-adjustable bearing seat (31), the position-adjustable bearing seat (31) being coupled to a hollow bearing seat base (32) mounted to a side wall of the machine body (1), wherein the position-adjustable bearing seat (31) is selectively attachable to the hollow bearing seat base (32) at different positions so that the rotary axles (121) of the movable roller (12A) are set at different axle distances with respect to the rotary axles (122) of the fixed roller (12B) for adjustment of tightness of the conveyor belt (11),
wherein a seal element is provided between contact surfaces of the position-adjustable bearing seat (31) and the hollow bearing seat base (32) in order to provide a sealing effect between the contact surfaces of the position-adjustable bearing seat (31) and the hollow bearing seat base (32) to resist leaking of liquid or pressure, **characterized in that** the position-adjustable bearing seat (31) is provided with a horizontal rail (312), and the hollow bearing seat base (32) is provided with a horizontal rail support (325) to ensure a relative movement between them is carried out in a horizontal direction.

## Patentansprüche

1. Förderbandbetriebene Gewebefärbemaschine (M) mit einer Vorrichtung zum Einstellen des Achsabstands, umfassend:
einen Maschinenkörper (1), der einen Innenraum aufweist;
eine oder mehrere Fördereinrichtungen, die im Innenraum des Maschinenkörpers (1) angeordnet sind, wobei die Fördereinrichtung oder jede der Fördereinrichtungen ein Förderband (11) in Form einer Endlosschleife, eine bewegliche Rolle (12A), die an einem Ende des Förderbandes (11) angeordnet ist und eine feste Rolle (12B), die an einem gegenüberliegenden Ende des Förderbandes (11) angeordnet ist, umfasst, wobei die feste Rolle (12B) Drehachsen (122) an ihren beiden Enden aufweist und zwei distale Enden aufweist, die jeweils über Lager mit Lagersitzen gekoppelt sind, die an Seitenwänden des Maschinenkörpers (1) angebracht sind, und die bewegliche Rolle (12A) Drehachsen (121) an zwei Enden davon aufweist, und zwei distale Enden aufweist, die jeweils über ein Lager mit einem lageverstellbaren Lagersitz (31) gekoppelt sind, wobei der lageverstellbare Lagersitz (31) mit einer hohlen Lagersitzbasis (32) gekoppelt ist, die an einer Seitenwand des Maschinenkörpers (1) angebracht ist, wobei der lageverstellbare Lagersitz (31) selektiv an verschiedenen Positionen an der hohlen Lagersitzbasis (32) befestigt werden kann, so dass die Drehachsen (121) der beweglichen Rolle (12A) auf unterschiedliche Achsabstände in Bezug auf die Drehachsen (122) der festen Rolle (12B) eingestellt werden, um die Straffheit des Förderbandes (11) einzustellen,
wobei zwischen Kontaktflächen des lageverstellbaren Lagersitzes (31) und der hohlen Lagersitzbasis (32) ein Dichtelement vorgesehen ist, um eine Dichtwirkung zwischen den Kontaktflächen des lageverstellbaren Lagersitzes (31) und der hohlen Lagersitzbasis (32) bereitzustellen, um dem Austreten von Flüssigkeit oder Druck entgegenzuwirken, **dadurch gekennzeichnet, dass** der lageverstellbare Lagersitz (31) mit einer horizontalen Schiene (312) versehen ist und die hohle Lagersitzbasis (32) mit einer horizontalen Schienenhalterung (325) versehen ist, um sicherzustellen, dass eine relative Bewegung zwischen ihnen in horizontaler Richtung erfolgt.

## Revendications

1. Machine de teinture de tissu entraînée par convoyeur (M) comprenant un dispositif de réglage de l'essieu, comprenant :
un corps de machine (1), qui a un espace intérieur ;
un ou plusieurs dispositifs de transport, qui sont disposés dans l'espace intérieur du corps de machine (1), le dispositif de transport ou chacun des dispositifs de transport comprenant une bande transporteuse (11) sous la forme d'une boucle sans fin, un rouleau mobile (12A) disposé à une extrémité de la bande transporteuse (11), et un rouleau fixe (12B) disposé à une extrémité opposée de la bande transporteuse (11), le rouleau fixe (12B) ayant des axes rotatifs (122) à ses deux extrémités et ayant deux extrémités distales respectivement couplées par des paliers à des sièges de palier montés sur des parois latérales du corps de machine (1), le rouleau mobile (12A) ayant des axes rotatifs (121) à ses deux extrémités et ayant deux extrémités distales dont chacune est respectivement couplée par un palier à un siège de palier à position réglable (31), le siège de palier à position réglable (31) étant couplé à une base de siège de palier creux (32) montée sur une paroi latérale du corps de machine (1), où le siège de palier à position réglable (31) peut être fixé sélectivement à la base du siège de palier creux (32) à différentes positions de sorte que les axes rotatifs (121) du rouleau mobile (12A) sont réglés à différentes distances d'axe par rapport aux axes rotatifs (122 ) du rouleau fixe (12B) pour le réglage de l'étanchéité de la bande transporteuse (11),
où un élément d'étanchéité est prévu entre les surfaces de contact du siège de palier à position réglable (31) et la base de siège de palier creux (32) afin de fournir un effet d'étanchéité entre les surfaces de contact du siège de palier à position réglable (31) et la base de siège de palier creux (32) pour résister aux fuites de liquide ou de pression, **caractérisé en ce que** le siège de palier à position réglable (31) est pourvu d'un rail horizontal (312), et la base de siège de palier creux (32) est munie d'un support de rails horizontaux (325) pour assurer qu'un mouvement relatif entre eux s'effectue dans une direction horizontale.
